# EUROPEAN PATENT APPLICATION

(11) **EP 1 383 290 A1**
(43) Date of publication of application: **21.01.2004**
(21) Application number: 03707114.9
(22) Date of filing: 27.02.2003
(51) Int. Cl.: H04L 27/00

(54) **RADIO RECEIVING APPARATUS, METHOD FOR DETERMINING MODULATION SCHEME, AND METHOD FOR DETERMINING CODING SCHEME**

(30) Priority: 27.02.2002 JP 2002051262
(71) Applicant: MATSUSHITA ELECTRIC INDUSTRIAL CO., LTD., Kadoma-shi, Osaka 571-8501 (JP)
(72) Inventor: SAITO, Yoshiko, Yokosuka-shi, Kanagawa 239-0806 (JP); TSUBAKI, Kazuhisa, Kawasaki-shi, Kanagawa 210-0024 (JP)
(74) Representative: Grünecker, Kinkeldey, Stockmair & Schwanhäusser Anwaltssozietät
(86) International application number: PCT/JP2003/002173
(87) International publication number: WO 2003/073716

(57) **Abstract**

The reverse rotation section phase-rotates received symbols in a direction opposite to the rotation direction on the transmitting side by an amount of phase rotation corresponding to each of a plurality of modulation schemes which are likely to be used on the transmitting side, the symbol decision section decides known symbols symbol by symbol in a training sequence section (known signal section), the error calculation section calculates decision errors, the comparison section compares the decided known symbols with a predetermined known symbol string corresponding to each of a plurality of modulation schemes which are likely to be used on the transmitting side in ascending order of the magnitude of errors and the modulation scheme decision section decides a modulation scheme to be used on the transmitting side according to the comparison result.

## Description

### Technical Field

The present invention relates to a wireless reception apparatus, a method for deciding modulation scheme and a method for deciding coding scheme.

### Background Art

One of the mobile communication standards currently used in Europe is GSM (Global Systems for Mobile communications). Recently, there are an increasing number of technical proposals on EDGE (Enhanced Data rate for GSM Evolution), a new standard that follows this GSM. In EDGE, there exists a channel whose data transmission rate changes according to the reception performance of a mobile station. A transmission rate is changed by switching between modulation schemes and switching between coding schemes.

Here, with regard to modulation schemes, no information on a modulation scheme is sent from a base station to a mobile station, and therefore the mobile station side needs to decide the modulation scheme using some method. An example of the method for deciding a modulation scheme is "EDGE: Blind Detection of modulation reusing GSM training sequences for 8-PSK (ETSI SMG2 Working Session on EDGE)."

On the other hand, with regard to a coding scheme, information on a coding scheme is sent from the base station to the mobile station, and therefore the mobile station can decide the coding scheme from the information. According to EDGE, information with 2 symbols is sent in 1 slot and it is possible to decide the coding scheme using information corresponding to 4 slots (that is, 8 symbols).

Wrong decisions of these modulation scheme and coding scheme will prevent demodulation and decoding of reception data and prevent normal communications. For this reason, these decisions require an extremely high degree of accuracy.

However, the conventional decision method assumes that data is transmitted in a favorable propagation environment and takes no account of influences of delay signals, noise and fading variations, etc., which are inevitable in a mobile communication, and therefore the possibility of wrong decisions of the modulation scheme and the coding scheme will increase in a poor propagation environment.

### Disclosure of Invention

It is an object of the present invention to provide a wireless reception apparatus capable of improving the accuracy of deciding a modulation scheme or coding scheme.

In order to attain the above described object, the present invention calculates decision errors in known symbols which are phase-rotated in a direction opposite to the rotation direction on the transmitting side by an amount of phase rotation corresponding to each of a plurality of modulation schemes which are likely to be used on the transmitting side and compares the known symbols after the decisions with a predetermined known symbol string corresponding to the plurality of modulation schemes which are likely to be used on the transmitting side in ascending order of the magnitude of errors.

### Brief Description of Drawings

FIG.1 illustrates GMSK according to a conventional system;
FIG.2 illustrates 8PSK according to the conventional system;
FIG.3 illustrates the operation on the receiving side of the conventional system;
FIG.4 illustrates the operation on the receiving side of the conventional system;
FIG.5 is a block diagram showing a configuration of a wireless reception apparatus according to Embodiment 1 of the present invention;
FIG.6 is a flow chart illustrating the operation of the wireless reception apparatus according to Embodiment 1 of the present invention;
FIG.7A illustrates a method of calculating errors (in the case of GMSK) by the wireless reception apparatus according to Embodiment 1 of the present invention;
FIG.7B illustrates a method of calculating errors (in the case of 8PSK) by the wireless reception apparatus according to Embodiment 1 of the present invention;
FIG.8 is a block diagram showing a configuration of a wireless reception apparatus according to Embodiment 2 of the present invention;
FIG.9 is a flow chart illustrating the operation of the wireless reception apparatus according to Embodiment 2 of the present invention;
FIG.10 illustrates a transmission pattern of known symbols used for deciding a coding scheme;
FIG.11 is a block diagram showing a configuration of a wireless reception apparatus according to Embodiment 3 of the present invention;
FIG.12 illustrates a sorting method and comparison method at the wireless reception apparatus according to Embodiment 3 of the present invention; and
FIG.13 is a flow chart illustrating the operation of the wireless reception apparatus according to Embodiment 3 of the present invention.

### Best Mode for Carrying out the Invention

With reference now to the attached drawings, embodiments of the present invention will be explained in detail below.

### (Embodiment 1)

The wireless reception apparatus according to this embodiment decides a modulation scheme using only symbols whose symbol decision error is equal to or lower than a predetermined value.

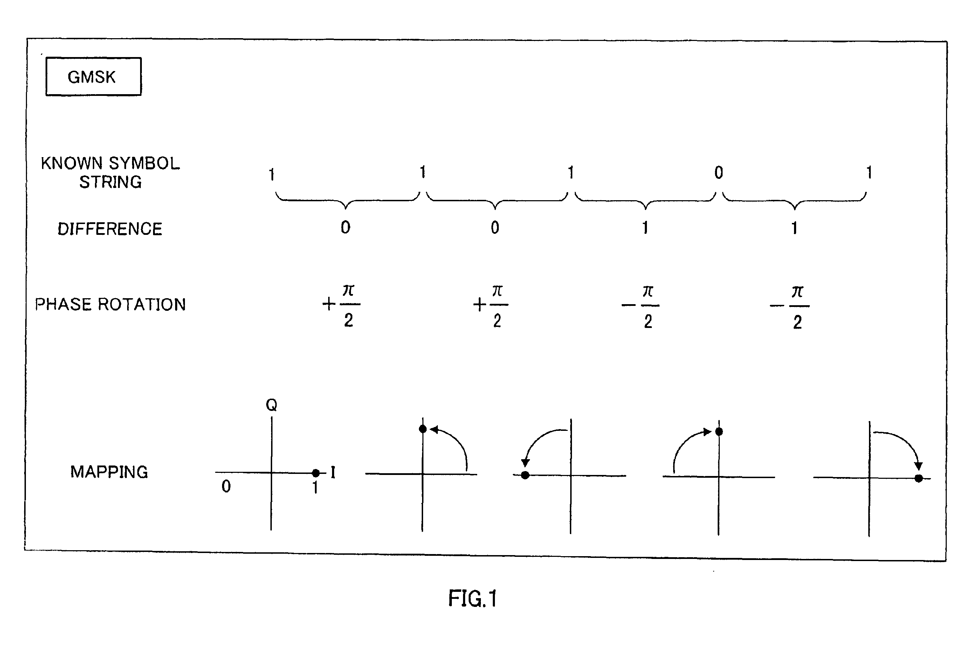

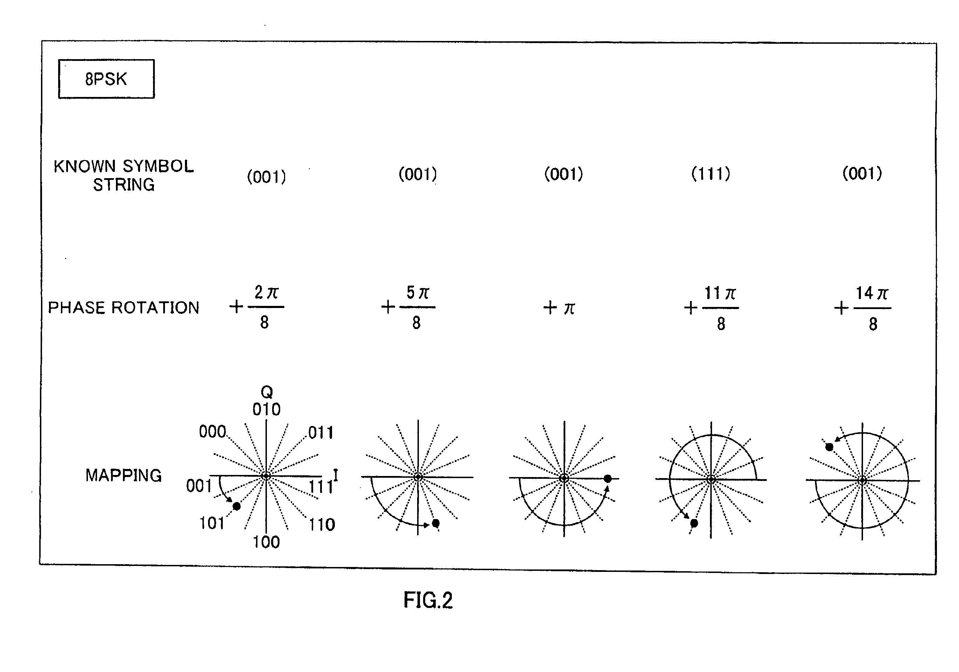

In the following explanation, a case where the aforementioned "EDGE: Blind Detection of modulation reusing GSM training sequences for 8-PSK (ETSI SMG2 Working Session on EDGE)" (hereinafter referred to as "conventional system") will be described. The conventional system uses two kinds of modulation scheme; GMSK and 8PSK. FIG.1 illustrates GMSK according to the conventional system and FIG.2 illustrates 8PSK according to the conventional system. The conventional system decides a modulation scheme by discerning a known symbol string (here, 5 symbols). This known symbol string is sent as a training sequence before data is sent from the transmitting side. As shown in FIG.1 and FIG.2, for example, when a known symbol string is 11101, the modulation scheme is GMSK, andwhen the known symbol string is (001) (001) (001) (111) (001), the modulation scheme is 8PSK.

First, GMSK will be explained using FIG.1. When the information that the modulation scheme is GMSK is indicated with the known symbol string 11101, a difference (exclusive OR) between symbols is calculated first. In the case of FIG.1, this difference is 0011. Then, symbol mapping positions are sequentially phase-rotated with difference 0 associated with +π/2 and difference 1 associated with -π/2. However, the first symbol is mapped at a position corresponding to a known symbol (here 1) assuming that the amount of phase rotation is zero. Therefore, when the known symbol string is 11101, the mapping of the transmission symbols is as shown in FIG.1. When GMSK is used as the modulation scheme, the transmitting side sends the known symbol string mapped in this way to the receiving side.

Then, 8PSK will be explained using FIG.2. According to the modulation scheme with EDGE, data after 8PSK modulation is rotated by 3iπ/8 (i: symbol number) for each symbol. Thus, when a known symbol string (001) (001) (001) (111) (001) is expressed, the mapping of the transmission symbols is for example, as shown in FIG.2. FIG. 2 shows a mapping obtained by phase-rotating the first symbol by +2π/8, second symbol by +5π/8, third symbol by +π, fourth symbol by +11π/8 and fifth symbol by +14 π/8 from normal 8PSK mapping positions. When 8PSK is used as the modulation scheme, the transmitting side sends the known symbol string mapped in this way to the receiving side.

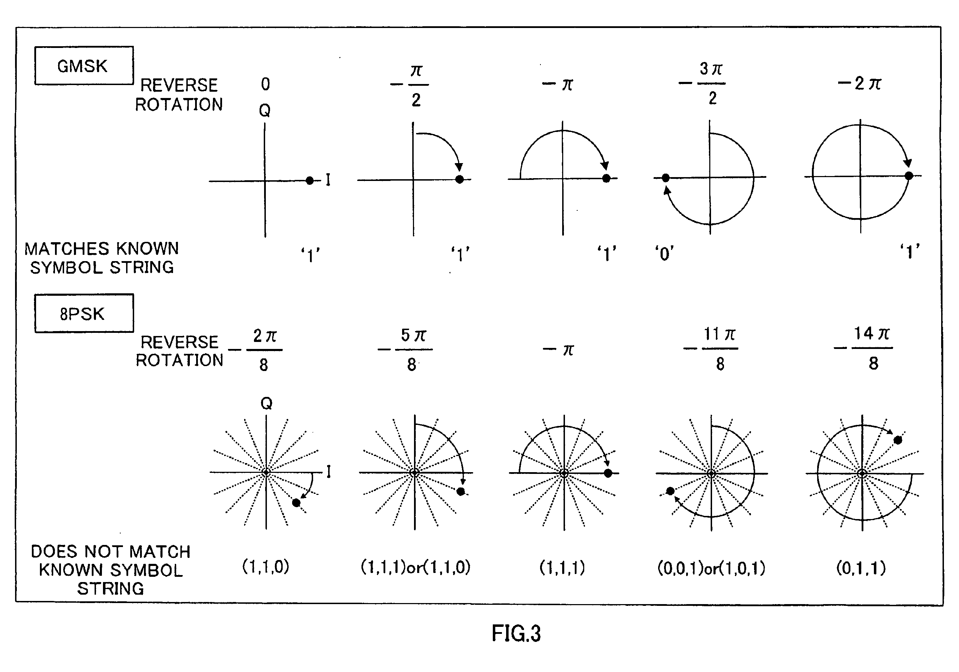

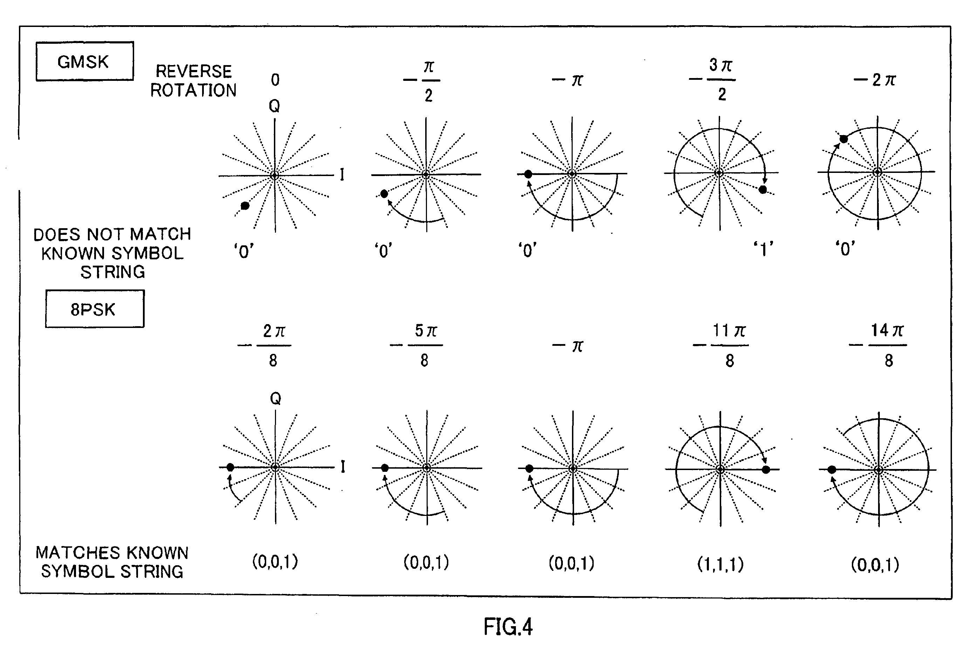

Then, the operation on the receiving side will be explained. FIG.3 and FIG.4 illustrate the operation according to the conventional system on the receiving side. As shown in FIG.3 and FIG.4, the receiving side rotates the phase of each received symbol reversely by an amount of phase rotation corresponding to GMSK and by an amount of phase rotation corresponding to 8PSK. That is, five received symbols are rotated reversely by 0, -π/2, -π, -3π/2 and -2π on one hand and by -2π /8, -5π/8, -π, -11π/8 and -14π/8 on the other. As a result, when the known symbol string mapped as shown in FIG.1 is sent from the transmitting side (that is, when the modulation scheme is GMSK), as shown in FIG.3, the symbol string decided after the reverse rotation matches the known symbol string (FIG.1) indicating that the modulation scheme is GMSK and does not match the known symbol string (FIG.2) indicating that the modulation scheme is 8PSK. It is clear in this way that the modulation scheme is GMSK. On the other hand, when the known symbol string mapped as shown in FIG.2 is sent from the transmitting side (that is, when the modulation scheme is 8PSK), as shown in FIG.4, the symbol string decided after the reverse rotation does not match the known symbol string (FIG.1) indicating that the modulation scheme is GMSK but matches the known symbol string (FIG.2) indicating that the modulation scheme is 8PSK. It is clear in this way that the modulation scheme is 8PSK. The conventional system decides a modulation scheme in this way.

Here, in a mobile communication, due to influences of delay signals, noise and fading variations, etc., shifts may be produced in symbol phases during transmission and these symbols may be received at positions shifted from the mapping positions shown in FIG.1 or FIG.2. If a modulation scheme is decided using these symbols with phase shifts, there is a high possibility that the decision may be wrong. Therefore, this embodiment is intended to decide a modulation scheme using only symbols whose symbol decision error is equal to or lower than a predetermined value.

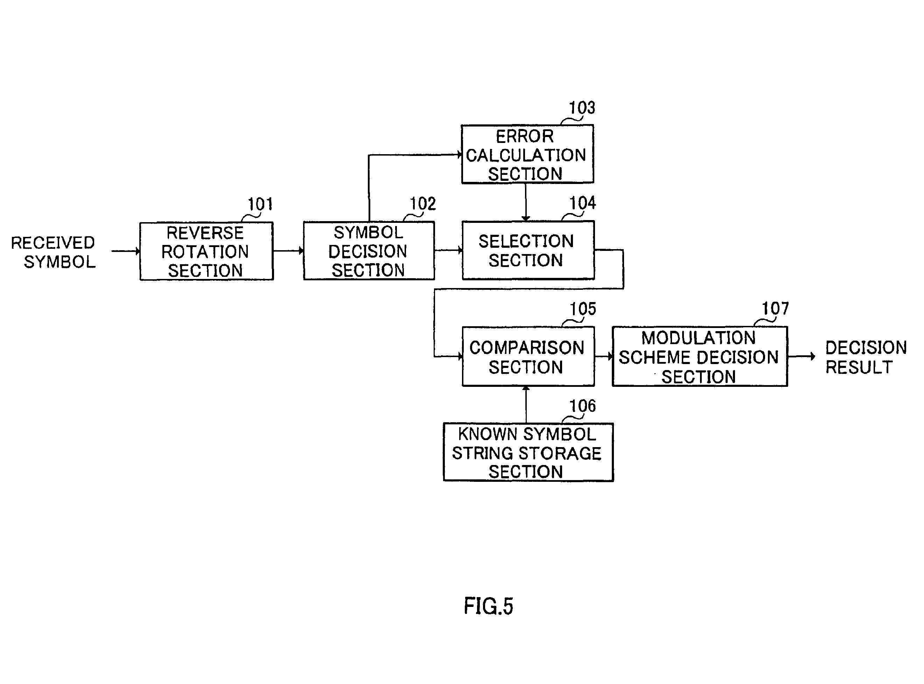

FIG.5 is a block diagram showing a configuration of the wireless reception apparatus according to Embodiment 1 of the present invention. In the wireless reception apparatus shown in FIG.5, a reverse rotation section 101 phase-rotates received symbols in a direction opposite to the rotation direction on the transmitting side by an amount of phase rotation corresponding to each of a plurality of modulation schemes which may be used on the transmitting side, a symbol decision section 102 decides a known symbol for each symbol in a training sequence section (known signal section), an error calculation section 103 calculates a decision error, a selection section 104 selects symbols whose error is equal to or lower than a predetermined value from the decide known symbols, a comparison section 105 compares the selected known symbols with a predetermined known symbol string corresponding to each of a plurality of modulation schemes which are likely to be used on the transmitting side and a modulation scheme decision section 107 decides the modulation scheme used on the transmitting side according to the comparison result. This will be described more specifically as follows.

As described above, the reverse rotation section 101 phase-rotates the known symbols which have been phase-rotated by the amount of phase rotation corresponding to the modulation scheme (BPSK or 8PSK) used on the transmitting side in a direction opposite to the rotation direction on the transmitting side by an amount of phase rotation corresponding to each of a plurality of modulation schemes (BPSK and 8PSK) which are likely to be used on the transmitting side. More specifically, the reverse rotation section 101 reversely rotates five received symbols received in the training sequence section by 0, -π/2, -π, -3π/2 and -2π on one hand and -2π/8, -5π/8, -π, -11π/8 and -14π/8 on the other. The symbols after the reverse rotation are sent to the symbol decision section 102.

The symbol decision section 102 decides the received symbols after the reverse rotation (known symbols after the reverse rotation) (symbol decision). As shown in FIG.3 and FIG.4, the symbol decision section 102 decides the value of each symbol in correspondence with the case with GMSK and the case with 8PSK from the mapping positions after the reverse rotation. Thus, each symbol is decided as 0 or 1 through a symbol decision corresponding to GMSK or decided as any of (000) (001) (010) (011) (100) (101) (110) (111) through a symbol decision corresponding to 8PSK. The decided symbols are sent to the selection section 104.

The error calculation section 103 calculates the error in the decision made by the symbol decision section 102. The specific calculation method will be described later.

The selection section 104 selects only known symbols whose error calculated by the error calculation section 103 is equal to or lower than a predetermined value from among the known symbols decided by the symbol decision section 102 and sends them to the comparison section 105.

The comparison section 105 compares the known symbols selected by the selection section 104 with the known symbol string stored in a known symbol string storage section 105. The known symbol string storage section 106 stores a known symbol string 11101 indicating that the modulation scheme is GMSK and a known symbol string (001) (001) (001) (111) (001) indicating that the modulation scheme is 8PSK and the comparison section 105 compares only the known symbols selected by the selection section 104 with these two known symbol strings. That is, the comparison section 105 compares the known symbols selected by the selection section 104 with a predetermined known symbol string corresponding to each of a plurality of modulation schemes which are likely to be used on the transmitting side. For the respective cases with GMSK and 8PSK, the number of symbols that have matched the known symbol string is sent to the modulation scheme decision section 107 as the comparison result.

The modulation scheme decision section 107 decides the modulation scheme used on the transmitting side according to the comparison result at the comparison section 105. More specifically, the modulation scheme decision section 107 decides the modulation scheme (here, GMSK or 8PSK) corresponding to the known symbol string having a maximum number of matched symbols in a comparison by the comparison section 105 as the modulation scheme used on the transmitting side. By deciding the modulation scheme according to the number of matched symbols, it is possible to accurately decide the modulation scheme. Then, the modulation scheme decision section 107 outputs the decision result.

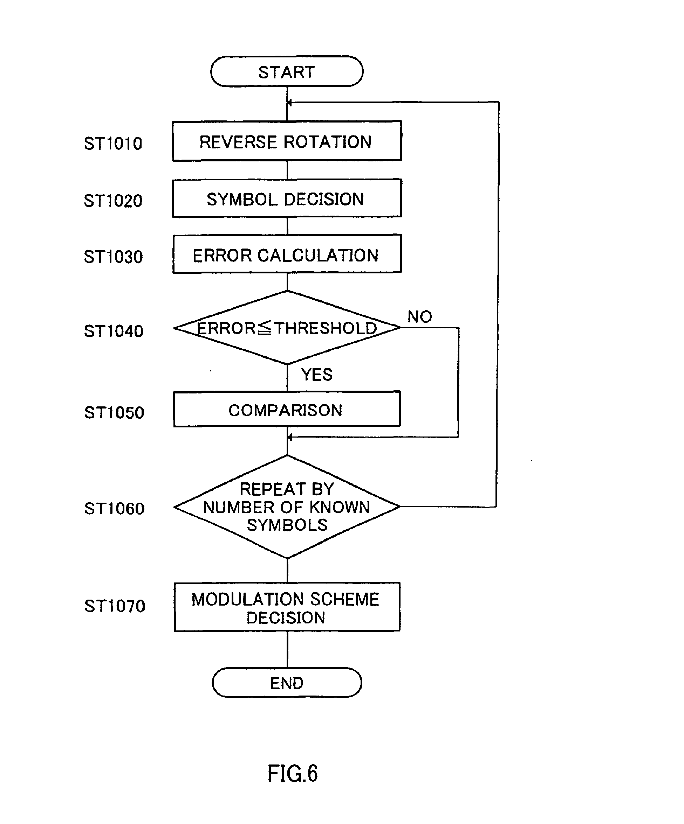

Then, the operation of the wireless reception apparatus and the method of calculating decision errors will be explained. FIG.6 is a flow chart illustrating the operation of the wireless reception apparatus according to Embodiment 1 of the present invention.

First, in step ST1010, the reverse rotation section 101 rotates received symbols reversely. The amount of reverse rotation is as shown in FIG.3 and FIG.4.

In step ST1020, the symbol decision section 102 decides symbols for GMSK and 8PSK respectively. More specifically, the symbol decision section 102 decides known symbols transmitted by the transmitting side from the positions of the received known symbols on the orthogonal coordinates (on IQ plane).

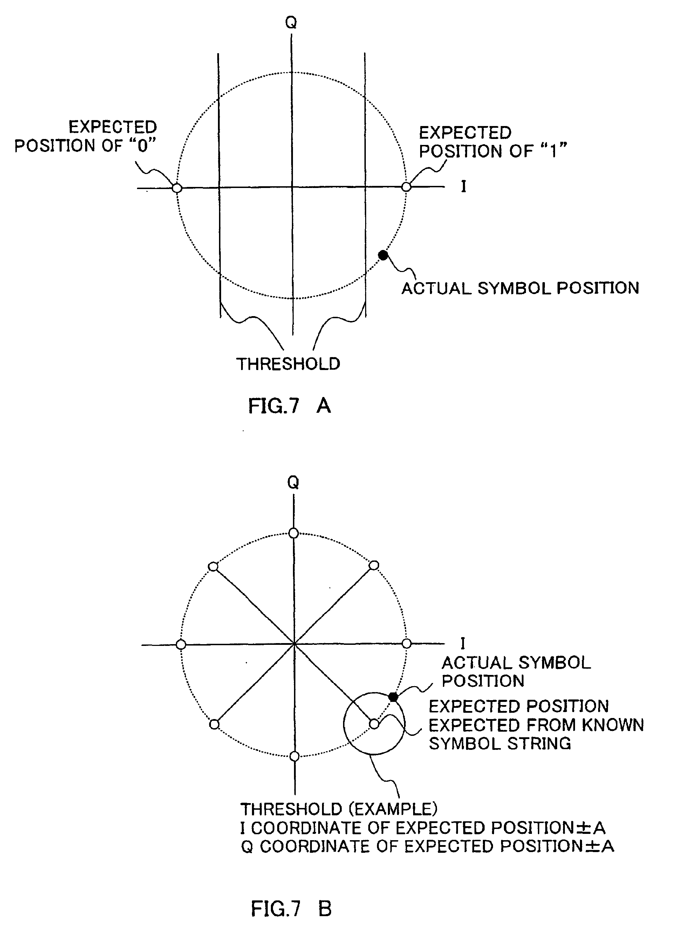

In step ST1030, the error calculation section 103 calculates an error in the symbol decision. FIG.7A illustrates a method of calculating errors (in the case of GMSK) by the wireless reception apparatus according to Embodiment 1 of the present invention. Furthermore, FIG.7B illustrates a method of calculating errors (in the case of 8PSK) by the wireless reception apparatus according to Embodiment 1 of the present invention. The mapping positions (actual symbol positions) of the symbols decided after the reverse rotation may be shifted from the original mapping positions (expected positions of known symbols) shown in FIG.1 or FIG.2 during transmission (FIG.7A and FIG.7B). Thus, the error calculation section 103 calculates the distance between the positions of received known symbols (actual symbol positions in FIG.7A and FIG.7B) and the known symbol positions (expected positions in FIG.7A and FIG. 7B) decided by the symbol decision section 102 on the orthogonal coordinates (IQ plane) as errors in the symbol decision.

In step ST1040, the selection section 104 compares the distance (error) calculated by the error calculation section 103 with a predetermined threshold as shown in FIG.7A and FIG.7B and selects only symbols with this distance (error) being equal to or lower than the predetermined threshold and sends them to the comparison section 105.

Therefore, in step ST1050, only symbols whose decided errors are equal to or lower than the predetermined threshold are compared by the comparison section 105 with a known symbol string stored in the known symbol string storage section 106.

Processes in step ST1010 to step ST1050 are repeated by the number of symbols (here 5 symbols) included in a known symbol string indicating the modulation scheme (step ST1060).

Then, in step ST1070, the modulation scheme decision section 107 decides the modulation scheme used on the transmitting side according to the comparison result at the comparison section 105.

Thus, the wireless reception apparatus of this embodiment decides the modulation scheme using only symbols whose decided errors are equal to or lower than the predetermined threshold, and can thereby improve the accuracy in deciding a modulation scheme. Furthermore, the wireless reception apparatus of this embodiment calculates a distance on orthogonal coordinates as errors in symbol decisions, and can thereby accurately calculate errors in symbol decisions using a simple method. Furthermore, provided with the reverse rotation section 101, it can also improve the accuracy in deciding a modulation scheme using a decision method whereby a modulation scheme is decided based on an amount of phase rotation and mapping of known symbols, for example, the above described conventional system.

### (Embodiment 2)

The wireless reception apparatus according to this embodiment uses symbols in ascending order of the magnitude of symbol decision errors for deciding a modulation scheme.

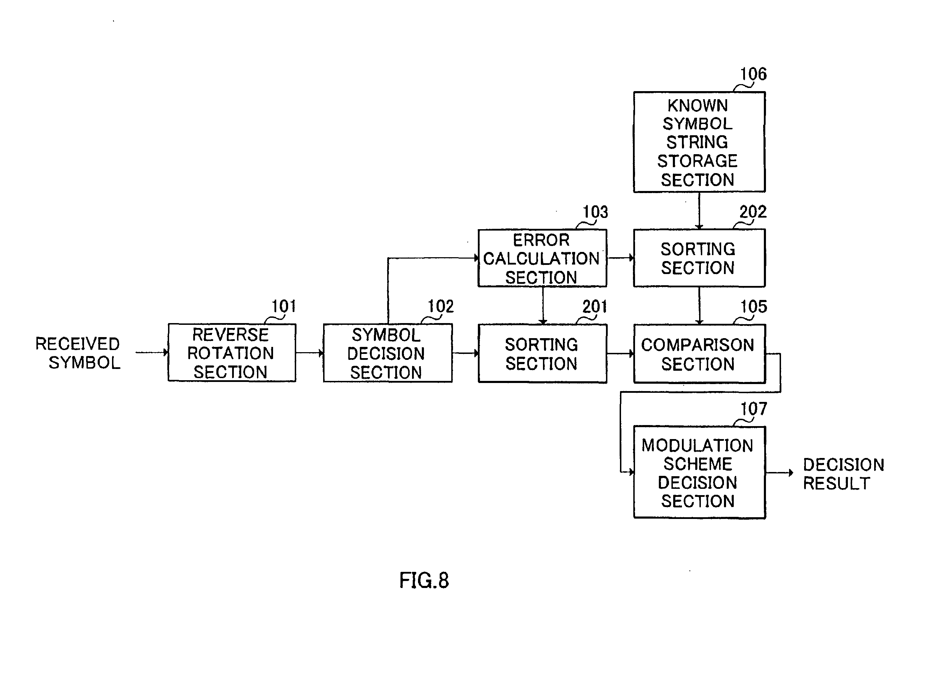

FIG.8 is a block diagram showing a configuration of a wireless reception apparatus according to Embodiment 2 of the present invention. However, the same components as those in Embodiment 1 (FIG.5) are assigned the same reference numerals and explanations thereof will be omitted.

A sorting section 201 sorts a string of known symbols decided by a symbol decision section 102 in ascending order of the magnitude of errors (distances on the orthogonal coordinates) calculated by an error calculation section 103 and sends the sorted symbol string to a comparison section 105. Likewise, a sorting section 202 sorts a string of known symbols stored in a known symbol string storage section 106 in ascending order of the magnitude of errors (distances on the orthogonal coordinates) calculated by the error calculation section 103 and sends the sorted symbol string to the comparison section 105. Through this sorting, the comparison section 105 compares the known symbols decided by the symbol decision section 102 with a predetermined known symbol string corresponding to each of a plurality of modulation schemes which are likely to be used on the transmitting side in ascending order (ascending order of distances) of the magnitude of errors calculated by the error calculation section 103. Then, for the respective cases of GMSK and 8PSK, the number of symbols which have matched the known symbol string is sent to a modulation scheme decision section 107 as the comparison result.

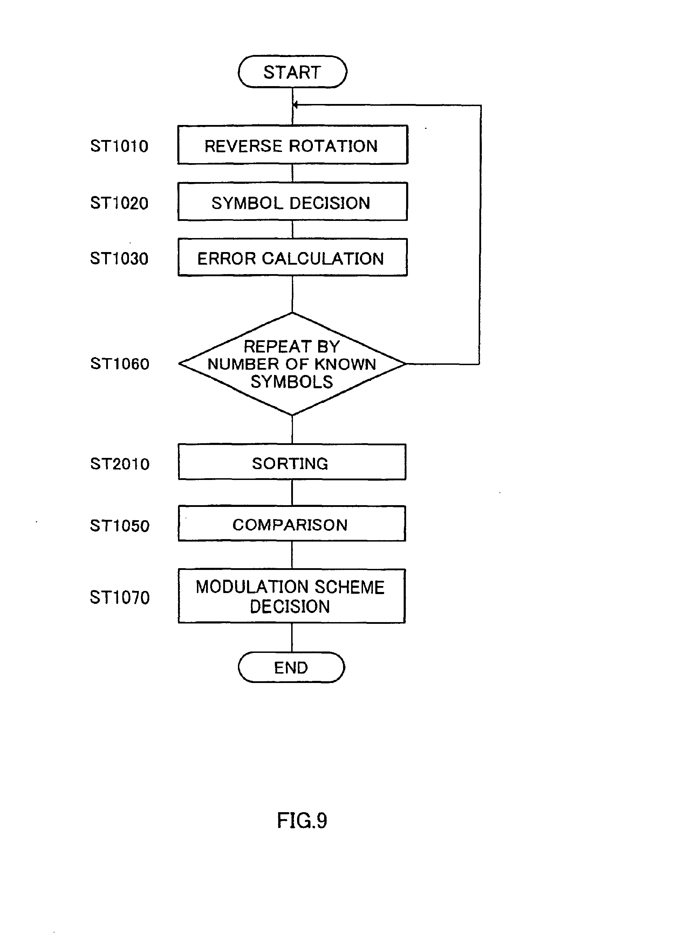

Then, the operation of the wireless reception apparatus will be explained. FIG.9 is a flow chart illustrating the operation of the wireless reception apparatus according to Embodiment 2 of the present invention. However, steps corresponding to the same operations as the operations in Embodiment 1 (FIG.6) are assigned the same reference numerals and explanations thereof will be omitted.

First, processes in step ST1010 to step ST1030 are repeatedby the number of symbols (here 5 symbols) included in a known symbol string indicating a modulation scheme (step ST1060).

In step ST2010, symbols are sorted by the sorting section 201 and sorting section 202 as described above based on the errors calculated by the error calculation section 103.

Then, in step ST1050, the comparison section 105 compares the known symbols decided by the symbol decision section 102 with the predetermined known symbol string stored in the known symbol string storage section 106 in ascending order of errors (ascending order of distances) calculated by the error calculation section 103. Since a comparison is made in ascending order of the magnitude of decision errors, symbols compared earlier have higher comparison reliability. Thus, even if symbols fewer than the symbols included in a known symbol string (e.g., 3 symbols) are compared to decide a modulation scheme instead of comparing all symbols included in the known symbol string (here 5 symbols), it is possible to decide the modulation scheme with a relativelyhigh degree of accuracy. Therefore, it is also possible for the comparison section 105 to make a comparison for a predetermined number of symbols (however, a smaller number than the number of symbols included in the known symbol string) and shorten the time required to decide the modulation scheme.

Thus, the wireless reception apparatus of this embodiment uses symbols in ascending order of the magnitude of symbol decision errors to decide a modulation scheme, and can thereby improve the accuracy of deciding the modulation scheme.

### (Embodiment 3)

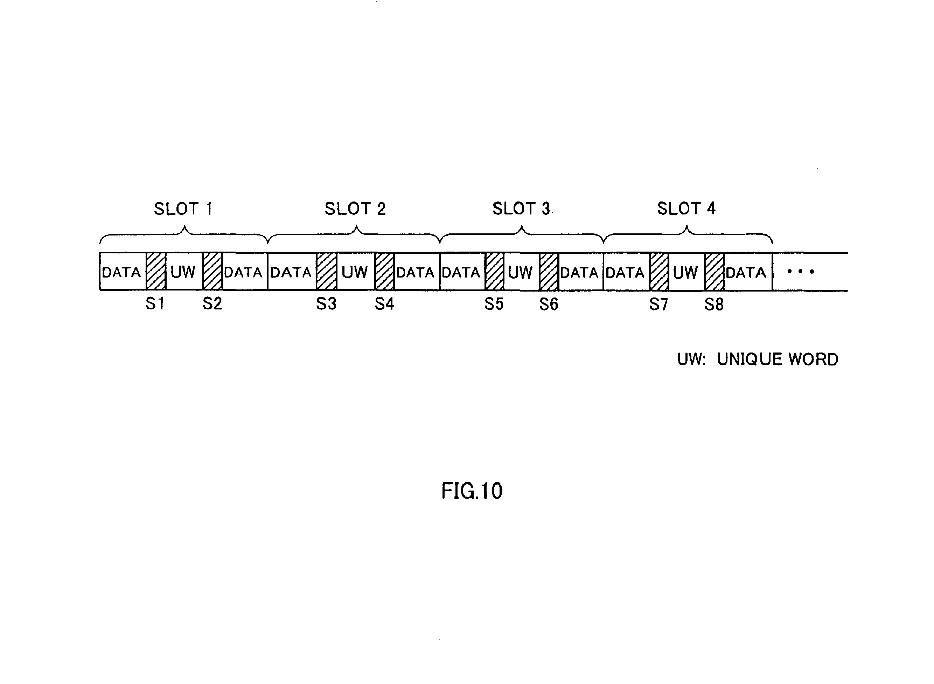

As described above, information on a coding scheme used on the base station is sent to a mobile station, and therefore the mobile station can decide the coding scheme from the information. As shown in FIG.10, according to EDGE two symbols are sent in one slot and the coding scheme can be decided using information corresponding to 4 slots (that is, 8 symbols of S1 to S8). Here, symbols S1 to S8 differ in likelihood (level of certainty). Therefore, the wireless reception apparatus according to this embodiment uses symbols in descending order of likelihood (level of certainty) for deciding a coding scheme.

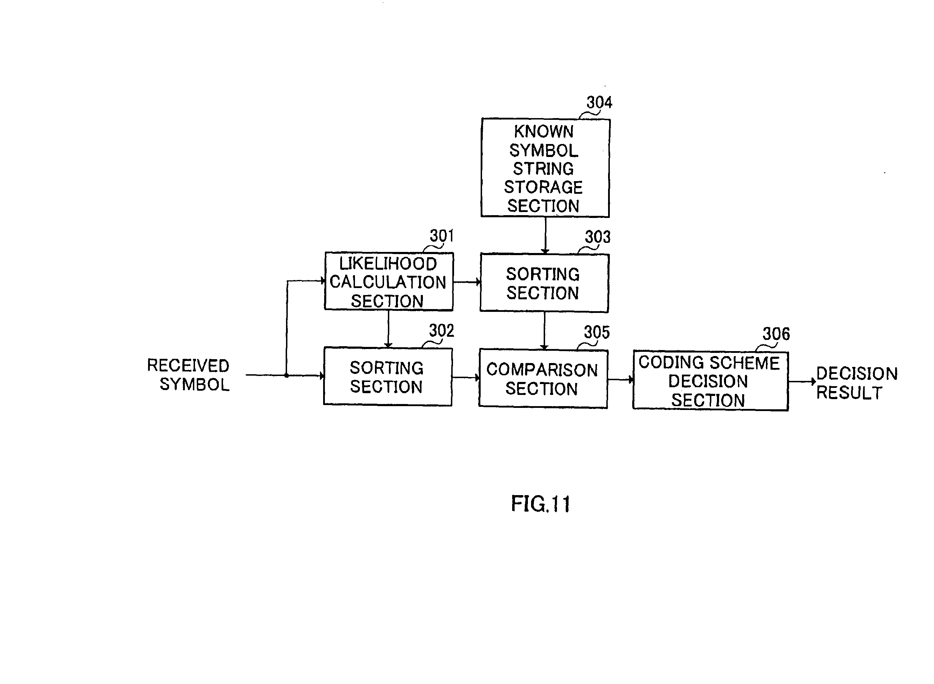

FIG.11 is a block diagram showing a configuration of a wireless reception apparatus according to Embodiment 3 of the present invention. A symbol string (S1 to S8 in FIG.10) indicating a coding scheme is input to a likelihood calculation section 301 and a sorting section 302. The likelihood calculation section 301 calculates likelihoods of symbols S1 to S8 included in the symbol string indicating a coding scheme. These likelihoods are sent to the sorting section 302 and the sorting section 303.

For these likelihoods, it is possible to calculate likelihood by slot (slot likelihood) or likelihood by symbol (symbol likelihood). A slot likelihood can be calculated using, for example, residual errors or reception level, etc., after equalization training processing. Furthermore, a symbol likelihood can be calculated using, for example, metric values, etc., calculated during equalization processing. A likelihood may also be calculated by combining a slot likelihood and a symbol likelihood. For example, slot likelihood X symbol likelihood or slot likelihood + symbol likelihood may be used.

Here, it is also possible to combine this embodiment with Embodiment 1. That is, it is possible to decide a modulation scheme as in the case of Embodiment 1 and further decide a coding scheme as in the case of this embodiment. In this case, a likelihood calculated by the likelihood calculation section 301 may include the following. That is, the error calculated by the error calculation section 103 shown in FIG.5 is regarded as a likelihood. Thus, by deciding a coding scheme using an error in a decision on each symbol, it is possible to decide a coding scheme with a high degree of estimation accuracy. Or equalization processing is carried out on received symbols (known symbols) phase-rotated by the reverse rotation section 101 in a direction opposite to the rotation direction on the transmitting side and a value obtained during the equalization processing (e.g., metric value, etc.) is regarded as a likelihood. This equalization processing is carried out after the decision of a modulation scheme is completed. In this way, using the output of conventionally carried out equalization processing allows the accuracy of deciding a coding scheme to be improved without increasing the amount of calculation required to calculate a likelihood.

The sorting section 302 sorts symbols S1 to S8 in descending order of likelihoods calculated by the likelihood calculation section 301 and sends the symbols to the comparison section 305. Likewise, the sorting section 303 sorts the known symbol string stored in the known symbol string storage section 304 in descending order of the likelihoods calculated by the likelihood calculation section 301 and sends the symbols to the comparison section 305. With this sorting, the comparison section 305 compares the symbols (S1 to S8) included in the symbol string with a predetermined known symbol string stored in the known symbol string storage section 304 and corresponding to each of a plurality of coding schemes which are likely to be used on the transmitting side in descending order of the likelihoods calculated by the likelihood calculation section 301.

More specifically, sorting and comparison will be performed as follows.

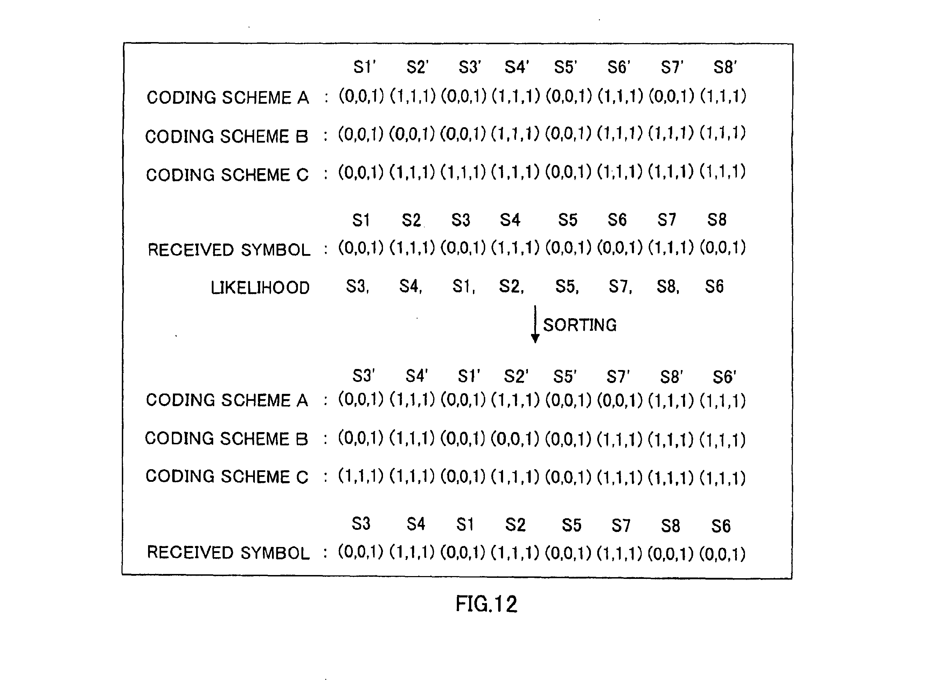

FIG. 12 illustrates a sorting method and comparison method by the wireless reception apparatus according to Embodiment 3 of the present invention. The known symbol string storage section 304 stores a predetermined known symbol string (S1' to S8') corresponding to each of a plurality of coding schemes (here, three coding schemes A to C) which are likely to be used on the transmitting side. Now, suppose the descending order of likelihoods calculated by the likelihood calculation section 301 is S3, S4, S1, S2, S5, S7, S8 and S6. According to this order, the sorting section 302 sorts received symbols S1 to S8 and the sorting section 303 sorts the symbol string S1' to S8' corresponding to the coding schemes A to C respectively. Thus, the comparison section 305 compares received symbols S1 to S8 with the symbol string S1' to S8' corresponding to each of the coding schemes A to C in descending order of likelihoods. Then, the number of symbols that have matched the known symbol string in each case of the coding schemes A to C is sent to the modulation scheme decision section 107 as the comparison result.

The coding scheme decision section 306 decides the coding scheme used on the transmitting side according to the comparison result at the comparison section 305. More specifically, the coding scheme decision section 306 decides the coding scheme corresponding to the known symbol string having a maximum number of symbols that have matched in the comparison at the comparison section 305 as a coding scheme used on the transmitting side. Thus, by deciding a coding scheme according to the number of matched symbols, it is possible to decide a coding scheme with a high degree of estimation accuracy. Then, the coding scheme decision section 306 outputs the decision result.

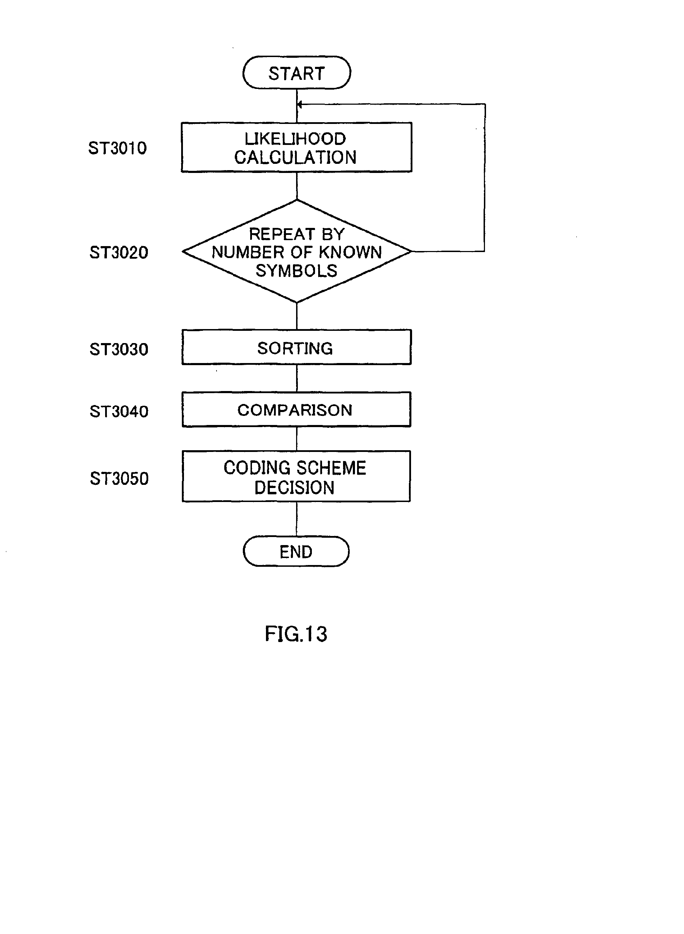

Then, the operation of the wireless reception apparatus will be explained. FIG.13 is a flow chart illustrating the operation of the wireless reception apparatus according to Embodiment 3 of the present invention.

First, in step ST3010, the likelihood calculation section 301 calculates likelihoods of received symbols. This process is repeated by the number of symbols (here 8 symbols S1 to S8) included in the symbol string indicating the coding scheme (step ST3020).

In step ST3030, based on the likelihoods calculated by the likelihood calculation section 301, the sorting section 302 and the sorting section 303 sort symbols as described above.

In step ST3040, the comparison section 305 compares the received symbols S1 to S8 with a predetermined known symbol string S1' to S8' stored in the known symbol string storage section 304 in descending order of likelihoods calculated by the likelihood calculation section 301 for each of the coding schemes A to C. As comparisons are made in descending order of likelihoods, symbols compared earlier have higher comparison reliability. Thus, even if symbols fewer than the symbols included in the symbol string (e.g., 4 symbols) are compared to decide a coding scheme instead of comparing all symbols included in the symbol string (here 8 symbols) , it is possible to decide the coding scheme with a relatively high degree of accuracy. Therefore, it is also possible for the comparison section 305 to make a comparison for a predetermined number of symbols (however, a smaller number than the number of symbols included in the symbol string) and shorten the time required to decide the coding scheme.

Then, in step ST3050, the coding scheme decision section 306 decides a coding scheme used on the transmitting side according to the comparison result at the comparison section 305.

Thus, the wireless reception apparatus according to this embodiment uses symbols in descending order of likelihoods (level of certainty) to decide a coding scheme and can thereby improve the accuracy of deciding a coding scheme.

It is also possible to combine above described Embodiments 1 to 3 as appropriate. For example, it is possible to combine Embodiment 1 and Embodiment 2 so as to sort selected symbols and then compare the symbols. This can further improve the degree of accuracy of deciding a modulation scheme.

Furthermore, the wireless reception apparatus according to Embodiments 1 to 3 is preferably applicable to a communication terminal apparatus used in a mobile communication system, etc. Incorporating the wireless reception apparatus according to Embodiments 1 to 3 in a communication terminal apparatus makes it possible to provide a communication terminal apparatus which has the same operation and effect as those described above and improve the reception performance of the communication terminal apparatus.

As described above, the present invention can improve the accuracy of deciding a modulation scheme and the accuracy of deciding a coding scheme.

This application is based on the Japanese Patent Application No. 2002-051262 filed on February 27, 2002, entire content of which is expressly incorporated by reference herein.

## Claims

1. A wireless reception apparatus comprising:
a symbol decision section that decides known symbols sent by the transmitting side;
a calculation section that calculates decision errors by said symbol decision section;
a comparison section that compares the known symbols decided by said symbol decision section with a predetermined known symbol string corresponding to each of a plurality of modulation schemes which are likely to be used on the transmitting side in ascending order of errors calculated by said calculation section; and
a modulation scheme decision section that decides a modulation scheme used on the transmitting side according to the comparison result by said comparison section.

2. The wireless reception apparatus according to claim 1, wherein said symbol decision section decides the known symbols sent by the transmitting side from the positions of the received known symbols on orthogonal coordinates,
said calculation section calculates a distance between the positions of the received known symbols and the positions of the known symbols decided by said symbol decision section on orthogonal coordinates, and
said comparison section compares in ascending order of the distances calculated by said calculation section.

3. The wireless reception apparatus according to claim 1, wherein said modulation scheme decision section decides a modulation scheme corresponding to a known symbol string having a maximum number of matched symbols in the comparison by said comparison section as the modulation scheme used on the transmitting side.

4. The wireless reception apparatus according to claim 1, further comprising a reverse rotation section which phase-rotates known symbols phase-rotated by an amount of phase rotation corresponding to the modulation scheme used on the transmitting side in a direction opposite to the rotation direction on the transmitting side by an amount of phase rotation corresponding to each of a plurality of modulation schemes which are likely to be used on the transmitting side.

5. A communication terminal apparatus comprising the wireless reception apparatus according to claim 1.

6. Amethod of deciding amodulation scheme comprising:
a symbol deciding step of deciding known symbols sent by the transmitting side;
a calculating step of calculating decision errors in said symbol deciding step;
a comparing step of comparing the known symbols decided in said symbol deciding step with a predetermined known symbol string corresponding to each of a plurality of modulation schemes which are likely to be used on the transmitting side in ascending order of errors calculated in said calculating step; and
a modulation scheme deciding step of deciding a modulation scheme used on the transmitting side according to the comparison result in said comparing step.
